# EUROPEAN PATENT SPECIFICATION

(11) **EP 1 295 675 B1**
(45) Date of publication and mention of the grant of the patent: **01.04.2009**
(21) Application number: 00915475.8
(22) Date of filing: 10.04.2000
(51) Int. Cl.: B23B 31/117

(54) **TOOL HOLDER MOUNTING STRUCTURE**
MONTAGESTRUKTUR FÜR WERKZEUGHALTER
STRUCTURE DE MONTAGE DE PORTE-OUTIL

(43) Date of publication of application: 26.03.2003
(73) Proprietor: Pascal Engineering Corporation, Itami-shi Hyogo 664-8502 (JP)
(72) Inventor: MIYAZAWA, Hiroshi, Akashi-shi, Hyogo 674-0074 (JP)
(74) Representative: TBK-Patent
(86) International application number: PCT/JP2000/002339
(87) International publication number: WO 2001/076815

(56) References cited:
- EP-A1- 0 730 927
- CH-A- 187 753
- JP-A- 7 096 436
- JP-A- 8 257 813
- US-A- 5 997 226

## Description

### Technical field

The present invention relates to a tool holder attachment structure, according to the preamble of claim 1, as known from document JP 7-096 436.

### Background technology

Conventionally, in machining tools such as drill presses, milling machines, and machining centers, a tool holder is attached to the end of a main shaft to support a tool. The main shaft rotates the tool to perform machining on the workpiece. Since the tool holder is removably attached to the main shaft, the main shaft is equipped with a retraction mechanism to draw in and secure the shank of the tool holder.

The tool holder includes: a tool support section for attaching a tool; a shank including a tapered outer perimeter surface; a pull stud secured to the shank; and a flange having a larger diameter than the tapered hole. The retraction mechanism pulls in the tool holder and fits and secures the shank to the tapered hole of the main shaft.

High machining precision of 1 micron error or less is demanded of recent machining tools. These machining tools must perform machining while rotating the main shaft at high speeds of 3000 - 4000 rpm. Thus, the tool holder and the main shaft rotating at high speeds tend to experience vibrations, which can be a factor in reduced machining precision. To prevent reduced machining precision, it would be desirable to increase securing strength by tightly securing the entire shank of the tool holder against the tapered hole. However, due to machining tolerances in the tapered hole of the main shaft and the tool holder, the tool can heat up while machining is being performed, resulting in thermal expansion of the main shaft and the tool holder. This makes it almost impossible to firmly and tightly secure the entire shank of the tool holder against the tapered hole of the main shaft. Furthermore, it is impossible to have the flange of the tool holder tightly abutting the end surface of the main shaft while having the shank of the tool holder tightly secured in the main shaft. Thus, standard conventional tool holders are not set up so that the flange abuts the end surface of the main shaft.

Next, various tool holders from conventional technologies will be described.

In Japanese laid-open patent publication number 8-108302, a tool holder includes: a main holder unit including a shank and a flange; a sleeve outwardly fitted to the shank so that it can move along the axial direction relative to the shank and having an outer perimeter surface with the same tapered shape as the tapered hole; and an elastic member interposed between the flange and the sleeve. The sleeve is divided at one section along the perimeter, and the elastic body is mounted in this gap. When the retraction mechanism draws in the tool holder, the flange abuts the end surface of the main shaft. The sleeve is pressed via the elastic member toward the base end of the main shaft. The sleeve is narrowed and engages with the tapered hole and is also coupled with the shank. In Japanese laid-open patent publication number 9-248727, a tool holder is formed as described above, but instead of the sleeve with a division at one section along the perimeter, a sleeve with an inner groove at one section along the perimeter is used.

With these tool holders, the overall sleeve diameter is narrowed when the retraction mechanism pulls in the tool holder. As a result, the tapered outer perimeter surface of the sleeve cannot be tightly fitted and secured against the tapered hole, making it difficult to have a uniform force over the entire perimeter to provide coupling with the inner surface of the tapered hole. Also, a larger number of parts is required and the structure is more complex, thus increasing manufacturing costs.

In a tool holder presented in Japanese laid-open patent publication number 7-96437, a ring-shaped groove is formed at the boundary between the shank and the flange. This ring-shaped groove allows a section of the flange to be formed with less thickness. When this tool holder is drawn in by the retraction mechanism, the flange abuts the end surface of the main shaft and is elastically deformed slightly, acting as a disc spring. This provides engagement between the shank and the tapered hole. However, the structure of the majority of the shank is no different than the conventional shank structure, so roughly the same problems as the conventional tool holders are involved.

JP 8 - 257 813 discloses a device for fixing a tool on a tool holder. According to JP 8 - 257 813 needle rollers are arranged in a spiral pattern on an outer surface of a chuck sleeve. By rotating a tightening nut toward a tightening direction, a tool can be fixed through the elastic deformation of the chuck sleeve.

The object of the present invention is to provide a tool holder that can provide a firm, elastic fit of the entirety of a shank in an attachment hole of a main shaft and that allows the flange to elastically abut the outer end surface of the main shaft so that vibrations are prevented and greater stability is achieved.

The object of the invention is achieved by a tool holder attachement structure according to claim 1.

The present invention provides a structure for removably attaching a tool holder for supporting a tool to a tapered attachment hole of a main shaft of a machining tool. A shank including a tapered outer perimeter surface is disposed on the tool holder. A plurality of elastic engagement pieces capable of abutting an outer perimeter surface of the tapered outer perimeter surface of the tool holder and being elastically deformed slightly in a radial direction are disposed at an inner surface section of the attachment hole of the main shaft. The shank is fitted to the attachment hole of the main shaft and the tool holder is secured to the main shaft with the plurality of elastic engagement pieces elastically deformed in the radial direction.

In this tool holder attachment structure, the shank is fitted and secured in the attachment hole with the plurality of elastic engagement pieces disposed on the inner surface of the attachment hole abutting the tapered outer perimeter surface of the shank of the tool holder and being elastically deformed slightly in the radial direction. Thus, the plurality of elastic engagement pieces are elastically deformed radially to tightly abut the tapered outer perimeter surface of the shank of the tool holder, and these elastic engagement pieces allow the entire shank to be fitted into the attachment hole of the main shaft with a uniform force. This provides firm securing of the tool holder to the main shaft. Vibrations generated at the main shaft can be dampened even when the main shaft is rotated at high speeds, thus improving machining precision.

It would be desirable to have a plurality of ring-shaped grooves formed at the inner surface section of the attachment hole of the main shaft at a predetermined interval along the axial center, the plurality of ring-shaped grooves and the plurality of elastic engagement pieces being arranged in an alternating manner along the axial center. The formation of the plurality of ring-shaped grooves allows the plurality of elastic engagement pieces to be formed integrally with the main shaft.

Also, it would be desirable to have the elastic engagement pieces sloped relative to a plane perpendicular to the axial center of the main shaft. In this case, it would be desirable to have the elastic engagement pieces sloped toward a wider end of a tapered shape of the attachment hole. It would also be possible to have the elastic engagement pieces formed parallel to a plane perpendicular to the axial center of the main shaft.

Also, it would be desirable to have a plurality of grooves extending longitudinally along the attachment hole formed at the inner surface section of the attachment hole in a symmetrical arrangement relative to the axial center.

Also, it would be desirable to have an elastic flange abut an outer end surface of the main shaft and elastically deforms toward the axial center when the tool holder is mounted on the main shaft. In this case, it would also be possible to have: the elastic flange formed with a ring shape; a ring-shaped groove formed at a radially inward position on the elastic flange; and a ring-shaped sloped groove formed at a radially outward position on the elastic flange.

It would also be possible to have the plurality of elastic engagement pieces formed as a plurality of collar-shaped members secured to the inner surface section of the attachment hole of the main shaft. It would also be possible to have a cross-section shape of the attachment hole and the shank along a plane perpendicular to the axial center form a non-circular shape capable of transferring rotational torque so that rotational torque can be transferred from the attachment hole of the main shaft to the shank without using a key.

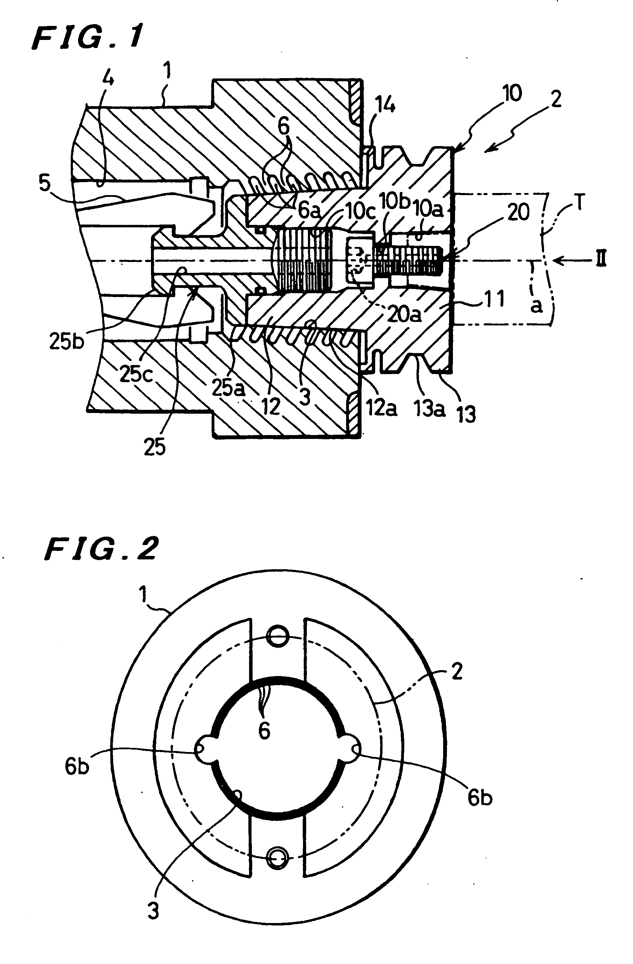

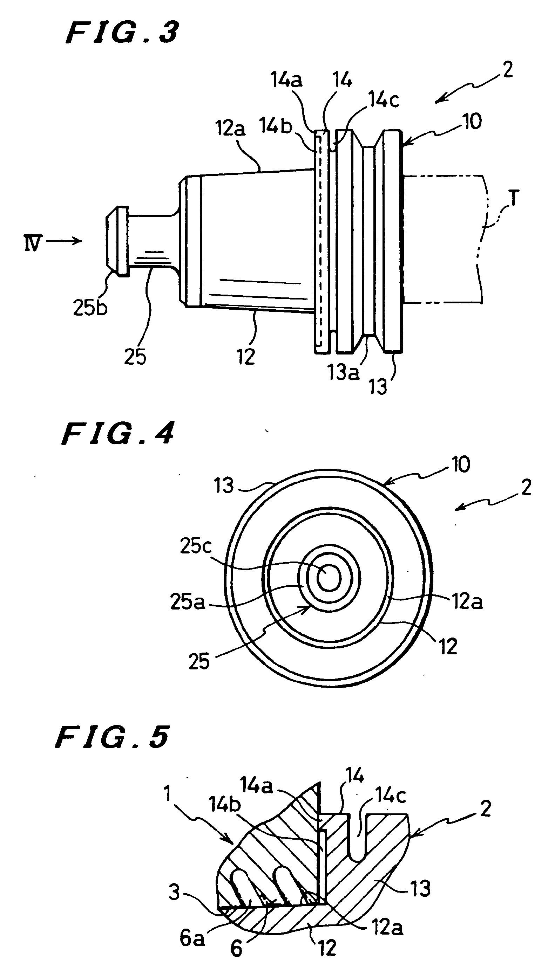

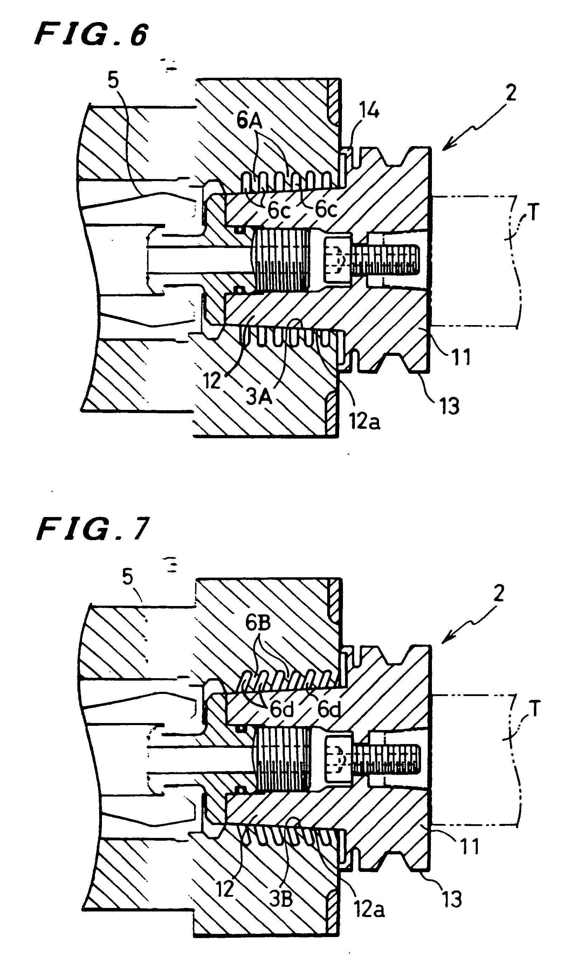

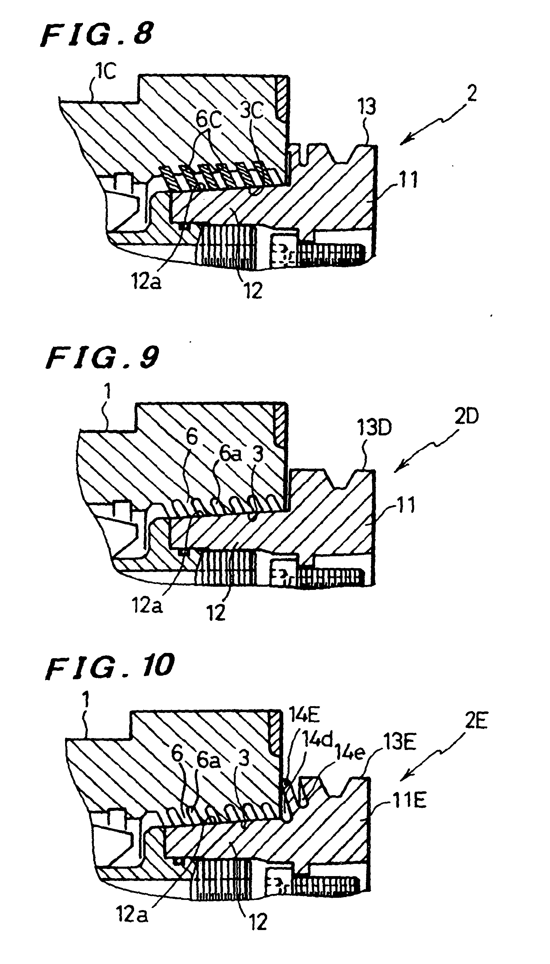

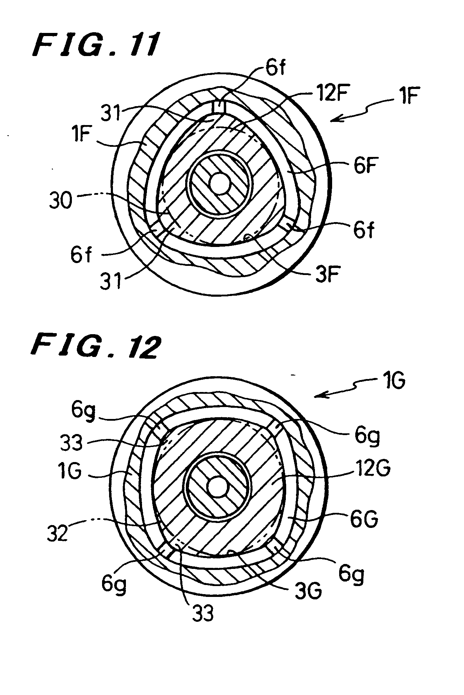

Fig. 1 through Fig. 5 are drawings relating to a main embodiment of the present invention. Fig. 1 is a vertical cross-section drawing of a tool holder including a section of a main shaft. Fig. 2 is a drawing of Fig. 1 seen from arrow II. Fig. 3 is a side-view drawing of a tool holder. Fig. 4 is a drawing of Fig. 3 as seen from the direction indicated by arrow IV. Fig. 5 is a schematic detail drawing of Fig. 1. Fig. 6 through Fig. 12 are drawings of alternative embodiments. Fig. 6 and Fig. 7 are vertical cross-section drawings of tool holders including a section of a main shaft. Fig. 8 through Fig. 10 are schematic vertical cross-section drawings of a tool holder and a main shaft. Fig. 11 and Fig. 12 are vertical cross-section drawings of a tool holder and main shaft cut along a plane perpendicular to the axial center.

Referring to the figures, the following is a description of the embodiments of the present invention.

This embodiment presents an example of the present invention implemented in a structure for replaceably attaching a tool holder to a main shaft of a machining tool, e.g., a machining center, equipped with an automatic tool changer device.

Referring to Fig. 1 and Fig. 2, an attachment hole 3 is formed at the end of a main shaft 1 and is tapered so that it is wider toward the end. The axial center of the hole is aligned with an axial center a of the main shaft 1. The end surface of the main shaft 1 is formed as a flat surface perpendicular with the axial center a. A holding hole 4 continuous with the attachment hole 3 is formed inside the main shaft 1. A collet 5, held in the holding hole 4, is disposed at the end of a draw bar of a retraction mechanism used to retract and secure a shank 12 of the tool holder 2 in the tapered hole 3 of the main shaft 1.

Referring to Fig. 1, Fig. 3, and Fig. 4, the tool holder 2 includes a main holder unit 10, a locking bolt 20, and a pull stud 25. Main holder unit 10 includes a tool support 11 for attaching a tool T, a shank 12 having a tapered perimeter surface 12a, and a flange 13. The tool support 11, the shank 12, and the flange 13 are formed integrally.

Inside the main holder unit 10, a tapered hole 10a, an insertion hole 10b, and a threaded hole 10c are formed in series, going from the end (to the right in Fig. 1) to the base (to the left in Fig. 1). The locking bolt 20 is inserted into the insertion hole 10b from the threaded hole 10c, and the threaded section thereof is projected into the tapered hole 10a. A connecting projection at the base of the tool T engages with the tapered hole 10a and meshes with the threaded bolt 20 so that it is locked to the tool holder 2. Thus, the tool support 11 is formed from the tapered hole 10a, the insertion hole 10b, the locking bolt 20, and the like.

The pull stud 25 meshes with the threaded hole 10c from the base end of the main holder unit 10, and a collar 25a thereof is abutted to the shank 12 so that it is secured. An engagement section 25b at the base end of the pull stud 25 is engaged with the collet 5 and draws in the shank 12 by pulling the draw bar (not shown in the figure) to the left in Fig. 1. Also formed are an insertion hole 25c, through which a hexagonal wrench shaft can be inserted, and a hexagonal hole 20a, which engages with the end of the hexagonal wrench shaft for pivoting of the locking bolt 20.

Referring to Fig. 1 and Fig. 2, a plurality of elastically deformable engagement pieces 6 are disposed are disposed along a plurality of positions along the axial center on the inner surface of the attachment hole 3 of the main shaft 1. The elastic engagement pieces 6 abut the tapered outer perimeter surface 12a of the tool holder 2 and are elastically deformed slightly in the radial direction. A plurality of ring-shaped grooves 6a are formed in the inner surface of the attachment hole 3 of the main shaft 1. The plurality of ring-shaped grooves 6a and the plurality of elastic engagement pieces 6 are arranged in an alternating manner along the axial center. The plurality of elastic engagement pieces 6 are formed integrally with the main shaft 2 by forming the plurality of ring-shaped grooves 6a on the inner surface of the attachment hole 3 of the main shaft 1. Each elastic engagement piece 6 is formed as a suitably rigid elastic member with a high elasticity constant.

The plurality of elastic engagement pieces 6 are sloped relative to a plane perpendicular to the axial center of the main shaft 1 so that toward the inner perimeter they point toward the wider end (to the right in Fig. 1) of the tapered shape of the attachment hole 3. The plurality of ring-shaped grooves 6a are also formed as sloped grooves so that toward the inner perimeter they point toward the wider end of the tapered shape of the attachment hole 3. The inner perimeter radius of the plurality of elastic engagement pieces 6 increases toward the end so that the tapered outer perimeter surface 2a of the tool holder 2 can be fitted.

Referring to Fig. 2, two grooves 6b are formed symmetrically relative to the axial center on the inner surface of the attachment hole 3 of the main shaft 1. The grooves 6b extend longitudinally along the attachment hole 3. As a result, each elastic engagement piece 6 is divided in two along the perimeter, and each section of the elastic engagement piece 6 extends along an arc of approximately 170 degrees along the inner perimeter of the attachment hole 3. By forming the two grooves 6b and dividing each elastic engagement piece 6 in two sections, the elastic engagement pieces 6 with a large elasticity constant can be easily elastically deformed, thus reducing the elasticity constant somewhat. A key can be mounted on each of the grooves 6b to allow rotational torque to be transferred from the main shaft 1 to the tool holder 2. When the tool holder 2 is mounted on the main shaft 1, these keys engage with key grooves (not shown in the figure) of the tool holder 2, allowing rotational torque to be transferred from the main shaft 1 to the tool holder 2.

Referring to Fig. 1, Fig. 3, and Fig. 5, an engagement groove 13a capable of engaging with an arm of the automatic tool changer is formed on the outer perimeter of the flange 13 of the tool holder 2. At the base of the flange 13 is disposed a ring-shaped elastic flange 14 having a high elasticity constant. When the tool holder 2 is mounted to the main shaft 1, the elastic flange 14 abuts the end surface (the outer end surface) of the main shaft 1 and is elastically deformed toward the axial center.

The elastic flange 14 is formed parallel with a plane perpendicular to the axial center of the main shaft 2. At the outer perimeter section thereof is formed a ring-shaped projection 14a that bends toward the base end and that can abut the end surface of the main shaft 1. A ring- shaped groove 14b is formed radially inward on the elastic flange 14, and a ring-shaped groove 14c is formed radially outward on the elastic flange 14. The ring-shaped groove 14b and the ring- shaped groove 14c allows the elasticity constant of the elastic flange 14 to be set to an appropriate value.

The operations and advantages of the structure for attaching the tool holder 2 to the main shaft 1 will be described.

When the shank 12 of the tool holder 2 is inserted into the attachment hole 3 of the main shaft 1, the end surface of the main shaft 1 abuts the elastic flange 14 before the shank 12 abuts the plurality of elastic engagement pieces 6. Next, the collet 5 at the end of the draw bar of the retraction mechanism draws the shank 12 of the tool holder 2 in toward the base of the main shaft 1. This causes the elastic flange 14 and the plurality of elastic engagement pieces 13 to be elastically deformed further, and the shank 12 is fitted and secured in the attachment hole 3. Referring to Fig. 5, once the plurality of the elastic engagement pieces 6 abut the tapered outer perimeter surface 12a of the tool holder 2 as indicated by the solid lines, the plurality of elastic engagement pieces 6 are slightly elastically deformed radially as indicated by the dotted lines. In this state, the shank 12 is fitted and secured in the attachment hole 3. In other words, the plurality of elastic engagement pieces 6 are elastically deformed radially so that they tightly abut the tapered outer perimeter surface 12a of the tool holder 2. This allows the entire shank 12 to be engaged, via the elastic engagement pieces 6, with the inner surface of the attachment hole 3 with a uniform force.

Furthermore, when the tool holder 2 is secured to the main shaft 1, the elastic flange 14 is also tightly abutted in an elastically deformed state against the end surface of the main shaft 1. Thus, the tool holder 2 can be secured and supported firmly to the main shaft 1 by having the plurality of the elastic engagement pieces 6 elastically deformed radially and abutted against the tapered outer perimeter surface 12a of the tool holder 2 and by having the elastic flange 14 elastically deformed and abutted against the end surface of the main shaft 1. As a result, vibrations in the main shaft 1 and the tool holder 2 are prevented even when the main shaft 1 is rotated at high speeds, thus improving machining precision in a reliable manner. In particular, since the elastic flange 14 is formed as a ring shape at a position with a large radial distance from the axial center a, elastic deformation and vibrations in the tool holder 2 can be effectively prevented, thus improving the stability of the tool holder 2.

Since the plurality of elastic engagement pieces 6 are disposed at a plurality of positions along the axial center on the inner surface of the attachment hole 3 of the main shaft 1, the entire shaft 12 can be reliably fitted against the inner surface of the attachment hole 3 with a uniform force. Since the plurality of ring-shaped grooves 6a are formed at a predetermined interval along the axial center on the inner surface of the attachment hole 3 of the main shaft 1, the plurality of elastic engagement pieces 6 can be formed integrally with the main shaft 1, thus reducing the number of parts and simplifying the structure.

Since the plurality of elastic engagement pieces 6 are sloped relative to a plane perpendicular with the axial center and each elastic engagement piece 6 is divided by forming the two grooves 6b on the inner surface of the attachment hole 3 of the main shaft 1, the elasticity constant of the plurality of elastic engagement pieces 6 can be reduced somewhat, making elastic deformation easier. Furthermore, the two grooves 6b, which are formed symmetrically relative to the axial center, can be used as key grooves for mounting connecting keys to allow torque to be transferred to the tool holder 2.

The plurality of elastic engagement pieces 6 are sloped toward the inner perimeter toward the wide end of the tapered shape of the attachment hole 3. Referring to Fig. 5, when the tool holder 2 is mounted in the attachment hole 3, the plurality of elastic engagement pieces 6 are elastically deformed toward the wide end of the tapered shape. From this state, the inner perimeter surface of the plurality of elastic engagement pieces 6 is locked by friction to the tapered outer perimeter surface 12a of the tool holder 2. The restorative force of the elastic engagement pieces 6 acts to move the tool holder 2 toward the base end (to the left in Fig. 1). This serves to increase the retraction force that draws in the tool holder 2 to the base end, allowing the retraction mechanism to be more compact.

When this retraction mechanism is released and the tool holder 2 is to be removed from the main shaft 1, disengaging the collet 5 causes the tool holder 2 to move slightly to the right in Fig. 1 due to the restorative force of the elastic flange 14. This disengages the elastic deformation of the plurality of the elastic engagement pieces 6, allowing the tool holder 2 to be removed by the arm of the automatic tool changer.

It would also be possible to have the plurality of elastic engagement pieces 6 and the elastic flange 14 abut the main shaft 1 roughly simultaneously when the tool holder 2 is mounted to the main shaft 1. Alternatively, it would be possible to have the plurality of elastic engagement pieces 6 abut the main shaft 1 before the elastic flange 14.

Next, alternative embodiments will be described. Elements that are essentially identical to those of the main embodiment described above will be assigned like numerals and corresponding descriptions will be omitted.
1) Referring to Fig. 6, there is shown a main shaft 1A. A plurality of elastic engagement pieces 6A are formed parallel to a plane perpendicular with the axial center the main shaft 1A. These elastic engagement pieces 6A are formed integrally with the main shaft 1A. A plurality of ring-shaped grooves 6c parallel with a plane perpendicular with the axial center of the main shaft 1A are formed at a predetermined interval along the axial center on the inner surface of the attachment hole 3A of the main shaft 1A.
   When the shank 12 is drawn in by the draw bar of the retraction mechanism, the plurality of elastic engagement pieces 6A receive forces perpendicular to the inner surface of the attachment hole 3A from the shank 12. This causes slight elastic deformation radially.
2) Referring to Fig. 7, a main shaft 1B is formed with a plurality of elastic engagement pieces 6B. These plurality of elastic engagement pieces 6B are sloped relative to a plane perpendicular to the axial center of the main shaft 1B so that toward the inner perimeter they point to the narrower end of the tapered shape of the attachment hole 3B. Ring-shaped grooves 6c are formed on the inner surface of the attachment hole 3B and are positioned at a predetermined interval along the axial center. Toward the inner perimeter, the ring-shaped grooves 6c are sloped toward the narrow end of the tapered shape of the attachment hole 3B. The elastic engagement pieces 6B and the ring-shaped grooves 6c are arranged in an alternating manner along the axial center, and the elastic engagement pieces 6B are formed integrally with the main shaft 1B. When the shank 12 is drawn in by the draw bar of the retraction mechanism, the plurality of elastic engagement pieces 6B receive forces perpendicular to the inner surface of the attachment hole 3A from the shank 12. This causes slight elastic deformation radially. When the tool holder 2 is being removed, the elastic restorative force of the plurality of elastic engagement pieces 6B and the elastic restorative force of the elastic flange 14 cause the tool holder 2 to move slightly to the right in Fig. 7. This is useful in the removal of the tool holder 2.
3) Referring to Fig. 8, the plurality of elastic engagement pieces are formed as a plurality of collar-shaped members 6C secured to grooves on the inner surface of an attachment hole 3C of a main shaft 1C. The plurality of collar-shaped members 6C are sloped relative to a plane perpendicular with the axial center of the main shaft 1C so that toward the inner perimeter they are pointed toward the wide end of the tapered shape of the attachment hole 3C. The collar- shaped members 6C can be formed as rings or can be formed as a plurality of sections that are symmetrical around the axial center. In place of these collar-shaped members 6C, it would also be possible to use collar-shaped members that project roughly in the same direction as the elastic engagement pieces 6A or the elastic engagement pieces 6B.
4) Referring to Fig. 9, a tool holder 2D is formed as the tool holder 2 described above with the omission of the elastic flange 14, the groove 14a, and the sloped groove 14b. A gap is left between the end surface of the main shaft 1 and the elastic flange 14.
5) Referring to Fig. 10, an elastic flange 14E of a tool holder 2E is sloped relative to a plane perpendicular to a main shaft 1C so that toward the outer perimeter it sloped toward the narrow end of the tapered shape of an attachment hole 3E. In order to have the elastic flange 14E formed integrally with a main holder unit 10E, on either side of the elastic flange 14E along the axial center are formed ring-shaped grooves 14e and sloped grooves 14d sloped so that toward the outer perimeter they point toward the narrow end of the tapered shape.
6) Referring to Fig. 11, a plurality of elastic engagement pieces 6F are disposed on a main shaft 1F. The cross-sectional shape of an attachment hole 3F of the main shaft 1F and the shank 12F along a plane perpendicular with the axial center of the shank 12F forms a non-circular triangular shape. This triangular shape is formed by three projections 31 formed at 120 degree intervals on the outside of an inscribed reference circle 30. These three projections 31 allow rotational torque to be transferred from the tapered hole 3F of the main shaft to the shank 12F without the use of keys. Three grooves 6f are formed at symmetrical positions relative to the axial center at the corners at the outer perimeter section of the shank 12F.
7) Referring to Fig. 12, a main shaft 1G includes a plurality of elastic engagement pieces 6G. The cross-sectional shape of an attachment hole 3G of the main shaft 1G and a shank 12G along a plane perpendicular with the axial center of the shank 12G forms a non-circular four-sided shape. This four-sided shape is formed by four projections 33 formed at 90 degree intervals on the outside of an inscribed circle 32. As with the tool holder 1F in Fig. 12, these four projections 33 allow rotational torque to be transferred from the tapered hole 3G of the main shaft to the shank 12G without the use of keys. Four grooves 6g are formed at symmetrical positions relative to the axial center at the corners at the outer perimeter section of the shank 12G. Besides the non-circular shapes indicated in Fig. 11 and Fig. 12, the shape of the cross-section along a plane perpendicular to the axial center of the shank and the tapered hole can be other non-circular shapes that are symmetrical relative to the axial center.
8) The radial widths of the plurality of the elastic engagement pieces can be set so that the pieces positioned toward the wide end of the tapered shape of the attachment hole are longer.
9) The grooves described above can be omitted. Also, the number and thickness of the elastic engagement pieces, the regions along the perimeter on which the elastic engagement pieces are formed, and the like can be set up as appropriate.
10) Various other modifications may be effected on the embodiment and alternative embodiments described about without departing from the scope of the present invention as defined in the claims. The present invention can be implemented for tool holders used in various types of machining tools.

## Claims

1. Tool holder attachment structure for removably attaching a tool holder (2) for supporting a tool (T) to a tapered attachment hole (3) of a main shaft (1) of a machining tool (T), wherein:
a shank (12) including a tapered outer perimeter surface is disposed on said tool holder (2),
**characterized by**
a plurality of ring-shaped elastic engagement pieces (6) capable of abutting an outer perimeter surface of said tapered outer perimeter surface of said tool holder (2) and being elastically deformed slightly in a radial direction are disposed at an inner surface section of said attachment hole (3) of said main shaft (1), wherein
said shank (12) is fitted to said attachment hole (3) of said main shaft (1) and said tool holder (2) is secured to said main shaft (1) with said plurality of elastic engagement pieces (6) elastically deformed in said radial direction.

2. A tool holder attachment structure as described in claim 1, wherein:
a plurality of ring-shaped grooves (6a) are formed at said inner surface section of said attachment hole (3) of said main shaft (1) at a predetermined interval along said axial center (a), said plurality of ring-shaped grooves (6a) and said plurality of elastic engagement pieces (6) being arranged in an alternating manner along said axial center (a); and
said formation of said plurality of ring-shaped grooves (6a) allows said plurality of elastic engagement pieces (6) to be formed integrally with said main shaft (1).

3. A tool holder attachment structure as described in claim 2, wherein said elastic engagement pieces (6) are sloped relative to a plane perpendicular to said axial center (a) of said main shaft (1).

4. A tool holder attachment structure as described in claim 3, wherein, toward an inner perimeter, said elastic engagement pieces (6) are sloped toward a wider end of a tapered shape of said attachment hole (3).

5. A tool holder attachment structure as described in claim 2, wherein said elastic engagement pieces (6) are formed parallel to a plane perpendicular to said axial center (a) of said main shaft (1).

6. A tool holder attachment structure as described in claim 4, wherein a plurality of grooves (6a) extending longitudinally along said attachment hole (3) are formed at said inner surface section of said attachment hole (3) in a symmetrical arrangement relative to said axial center (a).

7. A tool holder attachment structure as described in any one of claim 1 through claim 6, wherein an elastic flange (14) abuts an outer end surface of said main shaft (1) and elastically deforms toward said axial center (a) when said tool holder (2) is mounted on said main shaft (1).

8. A tool holder attachment structure as described in claim 7, wherein said elastic flange (14) is formed with a ring shape;
a ring-shaped groove (14b) is formed at a radially inward position on said elastic flange (14); and
a ring-shaped sloped groove (14e) is formed at a radially outward position on said elastic flange (14).

9. A tool holder attachment structure as described in claim 1, wherein said plurality of elastic engagement pieces (6) are formed as a plurality of collar-shaped members secured to said inner surface section of said attachment hole (3) of said main shaft (1).

10. A tool holder attachment structure as described in any one of claim 1 through claim 6, wherein a cross-section shape of said attachment hole (3) and said shank (12) along a plane perpendicular to said axial center (a) forms a non-circular shape capable of transferring rotational torque so that rotational torque can be transferred from said attachment hole (3) of said main shaft (1) to said shank (12) without using a key.

## Patentansprüche

1. Werkzeughalteranbringungsstruktur zum abnehmbaren Anbringen eines Werkzeughalters (2) zum Abstützen eines Werkzeugs (T) an einem konischen Anbringungsloch (3) einer Hauptwelle (1) eines Bearbeitungswerkzeugs (T), wobei:
ein Schaft (12) mit einer konischen Außenumfangsfläche an dem Werkzeughalter (2) angeordnet ist,
**gekennzeichnet durch**
eine Vielzahl von ringförmigen elastischen Eingriffsteilen (6), die geeignet sind, an einer Außenumfangsfläche der konischen Außenumfangsfläche des Werkzeughalters (2) anzuliegen und in einer radialen Richtung ein wenig elastisch verformt zu werden, und die an einem Innenumfangsbereich des Anbringungslochs (3) der Hauptwelle (1) angeordnet sind, wobei der Schaft (12) an dem Anbringungsloch (3) der Hauptwelle (1) befestigt ist und der Werkzeughalter (2) an der Hauptwelle (1) mit der Vielzahl von elastischen Eingriffsteilen (6) gesichert ist, die in der radialen Richtung elastisch verformt sind.

2. Werkzeughalteranbringungsstruktur nach Anspruch 1, wobei:
eine Vielzahl von ringförmigen Nuten (6a) an dem Innenumfangsbereich des Anbringungslochs (3) der Hauptwelle (1) in einem vorbestimmten Abstand entlang der axialen Mitte (a) angeordnet sind, wobei die Vielzahl von ringförmigen Nuten (6a) und die Vielzahl von elastischen Eingriffsteilen (6) abwechselnd entlang der axialen Mitte (a) angeordnet sind; und
die Ausbildung der Vielzahl von ringförmigen Nuten (6a) es zulässt, dass die Vielzahl von elastischen Eingriffsteilen (6) einstückig mit der Hauptwelle (1) ausgebildet sind.

3. Werkzeughalteranbringungsstruktur nach Anspruch 2, wobei die elastischen Eingriffsteile (6) relativ zu einer Ebene geneigt sind, die senkrecht zu der axialen Mitte (a) der Hauptwelle (1) ist.

4. Werkzeughalteranbringungsstruktur nach Anspruch 3, wobei zu einem Innenumfang hin die elastischen Eingriffsteile (6) zu einem breiteren Ende einer Konusform des Anbringungslochs (3) hin geneigt sind.

5. Werkzeughalteranbringungsstruktur nach Anspruch 2, wobei die elastischen Eingriffsteile (6) parallel zu einer Ebene ausgebildet sind, die senkrecht zu der axialen Mitte (a) der Hauptwelle (1) ist.

6. Werkzeughalteranbringungsstruktur nach Anspruch 4, wobei eine Vielzahl von Nuten (6a), die sich längsverlaufend entlang des Anbringungslochs (3) erstrecken, an dem Innenflächenbereich des Anbringungslochs (3) in einer symmetrischen Anordnung relativ zu der axialen Mitte (a) ausgebildet sind.

7. Werkzeughalteranbringungsstruktur nach einem von dem Anspruch 1 bis Anspruch 6, wobei ein elastischer Flansch (14) an einer Außenendfläche der Hauptwelle (1) anliegt und sich in Richtung der axialen Mitte (a) elastisch verformt, wenn der Werkzeughalter (2) an der Hauptwelle (1) montiert ist.

8. Werkzeughalteranbringungsstruktur nach Anspruch 7, wobei
der elastische Flansch (14) in einer Ringform ausgebildet ist;
eine ringförmige Nut (14b) an einer radial inneren Position an dem elastischen Flansch (14) ausgebildet ist; und
eine ringförmige, geneigte Nut (14e) an einer radial äußeren Position an dem elastischen Flansch (14) ausgebildet ist.

9. Werkzeughalteranbringungsstruktur nach Anspruch 1, wobei die Vielzahl von elastischen Eingriffsteilen (6) als eine Vielzahl von bundförmigen Bauteilen ausgebildet sind, die an dem Innenflächenbereich des Anbringungslochs (3) der Hauptwelle (1) gesichert sind.

10. Werkzeughalteranbringungsstruktur nach einem von dem Anspruch 1 bis Anspruch 6, wobei eine Querschnittsform des Anbringungslochs (3) und des Schafts (12) entlang einer Ebene, die zu der axialen Mitte (a) senkrecht ist, eine nicht kreisförmige Form aufweist, die zum Übertragen eines Drehmoments geeignet ist, so dass ein Drehmoment von dem Anbringungsloch (3) der Hauptwelle (1) zu dem Schaft (12) ohne Verwendung eines Keils übertragen werden kann.

## Revendications

1. Structure de montage d'un porte-outil pour monter de manière amovible un porte-outil (2) pour soutenir un outil (T) à un trou de montage (3) conique d'un arbre principal (1) d'une machine d'usinage (T), dans laquelle :
une queue (12) comportant une surface de périmètre externe conique est disposée sur ledit porte-outil (2),
**caractérisée par**
plusieurs pièces d'engagement élastiques (6) en forme d'anneaux aptes à se mettre en butée contre une surface de périmètre externe de ladite surface de périmètre externe conique dudit porte-outil (2) et étant légèrement déformées de manière élastique dans une direction radiale sont disposées au niveau d'une section de surface interne dudit trou de montage (3) dudit arbre principal (1), où
ladite queue (12) est ajustée audit trou de montage (3) dudit arbre principal (1) et ledit porte-outil (2) est solidaire dudit arbre principal (1) avec ladite pluralité de pièces d'engagement élastiques (6) déformées de manière élastique dans ladite direction radiale.

2. Structure de montage d'un porte-outil selon la revendication 1, dans laquelle:
plusieurs rainures (6a) en forme d'anneaux sont formées au niveau de ladite section de surface interne dudit trou de montage (3) dudit arbre principal (1) à un intervalle prédéterminé le long dudit centre axial (a), ladite pluralité de rainures (6a) en forme d'anneaux et ladite pluralité de pièces d'engagement élastiques (6) étant agencées de manière alternée le long dudit centre axial (a) ; et
ladite formation de ladite pluralité de rainures (6a) en forme d'anneaux permet à ladite pluralité de pièces d'engagement élastiques (6) d'être formées venues de matière avec ledit arbre principal (1).

3. Structure de montage d'un porte-outil selon la revendication 2, dans laquelle lesdites pièces d'engagement élastiques (6) sont inclinées par rapport à un plan perpendiculaire audit centre axial (a) dudit arbre principal (1).

4. Structure de montage d'un porte-outil selon la revendication 3, dans laquelle, vers un périmètre interne, lesdites pièces d'engagement élastiques (6) sont inclinées vers une extrémité plus large d'une forme conique dudit trou de montage (3).

5. Structure de montage d'un porte-outil selon la revendication 2, dans laquelle lesdites pièces d'engagement élastiques (6) sont formées de manière parallèle à un plan perpendiculaire audit centre axial (a) dudit arbre principal (1).

6. Structure de montage d'un porte-outil selon la revendication 4, dans laquelle plusieurs rainures (6a) se déployant longitudinalement le long dudit trou de montage (3) sont formées au niveau de ladite section de surface interne dudit trou de montage (3) dans un agencement symétrique par rapport audit centre axial (a).

7. Structure de montage d'un porte-outil selon l'une quelconque de la revendication 1 à 6, dans laquelle une bride élastique (14) se trouve en butée contre une surface d'extrémité externe dudit arbre principal (1) et se déforme élastiquement vers ledit centre axial (a) lorsque ledit porte-outil (2) est monté sur ledit arbre principal (1).

8. Structure de montage d'un porte-outil selon la revendication 7, dans laquelle ladite bride élastique (14) a une forme d'anneau ;
une rainure (14b) en forme d'anneau est formée au niveau d'une position radialement rentrante sur ladite bride élastique (14) ; et
une rainure inclinée (14e) en forme d'anneau est formée au niveau d'une position radialement sortante sur ladite bride élastique (14).

9. Structure de montage d'un porte-outil selon la revendication 1, dans laquelle ladite pluralité de pièces d'engagement élastiques (6) sont formées comme plusieurs éléments en forme de colliers solidaires de ladite section de surface interne dudit trou de montage (3) dudit arbre principal (1).

10. Structure de montage d'un porte-outil selon l'une quelconque de la revendication 1 à la revendication 6, dans laquelle une forme en coupe transversale dudit trou de montage (3) et de ladite queue (12) le long d'un plan perpendiculaire audit centre axial (a) présente une forme non circulaire apte à transférer un couple de rotation de telle sorte que le couple de rotation puisse être transféré dudit trou de montage (3) dudit arbre principal (1) à ladite queue (12) sans utiliser de clé.
